(19) Europäisches Patentamt

European Patent Office

Office européen des brevets

(11) **EP 1 669 896 A2**

(12) **EUROPEAN PATENT APPLICATION**

(43) Date of publication:
**14.06.2006 Bulletin 2006/24**

(51) Int Cl.:
*G06F 17/30* (2006.01)

(21) Application number: **05111255.5**

(22) Date of filing: **24.11.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **03.12.2004 AU 2004235636
03.12.2004 US 632525 P**

(71) Applicant: **Panscient Pty Ltd.
Adelaide SA 5000 (AU)**

(72) Inventors:
- **BAXTER, Jonathan
  Adelaide 5000 (AU)**
- **SEYMORE, Kirstie
  Adelaide 5000 (AU)**

(74) Representative: **Gates, Marie Christina Esther et al
Tomkins & Co.
5 Dartmouth Road
Dublin 6 (IE)**

(54) **A machine learning system for extracting structured records from web pages and other text sources**

(57)   A method for extracting a structured record (190) from a document (100) is described where the the structured record includes information related to a predetermined subject matter (120), with this information being organized into categories within the structured record. The method comprises the steps of identifying a span of text (130) in the document (100) according to criteria associated with the predetermined subject matter and processing (150) the span of text to extract at least one text element associated with at least one of the categories of the structured record (190) from the document (100).

Figure 5:

**Description**

**Field of the Invention**

The present invention relates to a machine learning system for extracting structured records from documents in a corpus. In one particular form the present invention relates to a system for extracting structured records from a web site.

**Background of the Invention**

As the web continues to expand at an exponential rate, the primary mechansim for finding web pages of interest is through the use of search engines such as Google™. Search engines of this type use sophisticated ranking technology to determine lists of web pages that attempt to match a given query. However, there are many queries that are not usefully answered by just a list of web pages. For example a query such as "Give me all the online biographies of IT managers in Adelaide", or "Give me all the open Sydney-based sales positions listed on corporate websites", or even alternatively "What are the obituaries posted on newspaper sites in the last week for people with surname Baxter" all relate to further structured information that may be found in a number of web pages from the same or different sites.

Accordingly, to answer such a query a search engine must extract more than just the words in a web page; it must also extract higer-level semantic information such as people names, jobtitles, locations from a given web page and then further process this higher-level information into structured records. These records would then be queried as if one were simply querying a database, with the results being returned as lists of structured records rather than web pages.

There have been a number of attempts to provide this type of searching functionality. However, existing systems for extracting structured records from unstructured sources all suffer from the problem that they are painstakingly hand-tuned to their specific search domain. Thus in the example queries outlined above which relate to different domains or areas of interests such as employment, corporate information or even obituaries, the extraction systems must be customised according to the expected query. Clearly, this has a number of disadvantages as extraction systems of this type must each be developed and tuned separately depending on the expected query type. Where a query may relate to a number of different search domains or areas of interest the performance of existing extraction systems will be severely reduced.

It is an object of the present invention to provide a method that is capable of extracting a structured record from a document relevant to a given query type that is substantially independent of the domain of interest of that query.

It is a further object of the present invention to provide a method that is capable of extracting a structured record from a document that employs machine learning methods.

**Summary of the Invention**

In a first aspect the present invention accordingly provides a method for extracting a structured record from a document, said structured record including information related to a predetermined subject matter, said information to be organized into categories within said structured record, said method comprising the steps of:

identifying a span of text in said document according to criteria associated with said predetermined subject matter; and processing said span of text to extract at least one text element associated with at least one of said categories of said structured record from said document.

The top down approach employed by the present invention addresses a number of disadvantages of the prior art in that information obtained from a higher level of extraction may be employed in refining the extraction at lower levels such as identifying a relevant span of text and then forming a structured record from this span. Many prior art approaches attempt to use natural language processing (NLP) techniques which in direct contrast to the present invention identify words and entities within a document and then try to associate these words and entities with each other to form structured information. The top down approach of the present invention also makes it directly applicable to a machine learning approach which automates the extraction process.

Preferably, said step of processing said span of text further comprises:

identifying an entity within said span of text, said entity including at least one entity text element, wherein said entity is associated with at least one of said categories of said structured record.

Preferably, said step of processing said span of text further comprises:

identifying a sub-entity within said entity, said sub-entity including at least one sub-entity text element, wherein said sub-entity is associated with at least one of said categories of said structured record.

Preferably, said step of processing said span of text further comprises:

where a plurality of said entity are identified, associating said entities within said span of text, wherein said step of associating said entities includes linking related entities together for storage in a category of said structured record.

Preferably, said step of processing said span of text further comprises:

normalizing said entities within said span of text, wherein said step of normalizing said entities includes determining whether two or more identified entities refer to the same entity that is to be organized in a category of said structured record.

Preferably, said step of identifying a span of text further comprises:

dividing said document into a plurality of text nodes, said text nodes each including at least one text element; generating a text node feature vector for each of said text nodes, said text node feature vector generated in part according to features relevant to said criteria, thereby generating a text node feature vector sequence for said document; and calculating a text node label sequence corresponding to said text node feature vector sequence, said text node label sequence calculated by a predictive algorithm adapted to generate said text node label sequence from an input text node feature vector sequence, wherein said labels forming said text node label sequence identify a given text node as being associated with said predetermined subject matter, thereby identifying said span of text.

Preferably, said predictive model is a classifier based on a Markov model trained on labeled text node feature vector sequences.
Optionally, said predictive model is a hand tuned decision tree based procedure.
Preferably, said step of identifying an entity within said span of text further comprises:

dividing said span of text into a plurality of text elements; generating an entity feature vector for each of said text elements, said entity feature vector generated in part according to features relevant to said criteria, thereby generating an entity feature vector sequence for said span of text; and calculating an entity label sequence corresponding to said entity feature vector sequence, said entity label sequence calculated by a predictive algorithm adapted to generate said entity label sequence from an input entity feature vector sequence, wherein said labels forming said entity label sequence identify a given entity text element as being associated with said entity.

Preferably, said step of identifying a sub-entity within said entity further comprises:

dividing said entity into a plurality of text elements; generating a sub-entity feature vector for each of said text elements, said sub-entity feature vector generated in part according to features relevant to said criteria, thereby generating a sub-entity feature vector sequence for said entity; and calculating a sub-entity label sequence corresponding to said sub-entity feature vector sequence, said sub-entity label sequence calculated by a predictive algorithm adapted to generate said sub-entity label sequence from an input entity feature vector sequence, wherein said labels forming said sub-entity label sequence identify a given sub-entity text element as being associated with said sub-entity.

Preferably, said step of associating said entities within said span of text further comprises:

forming pairs of entities to determine if they are to be associated; generating an entity pair feature vector for each pair of entities, said entity pair feature vector generated in part according to features relevant to associations between entity pairs; calculating an association label based on said entity pair feature vector to determine if a given pair of entities are linked, said association label calculated by a predictive algorithm adapted to generate said association label from an input entity pair feature vector.

Preferably, said step of forming pairs of entities to determine if they are to be associated further comprises:

forming only those pairs of entities which are within a predetermined number of text elements from each other.

Preferably, said step of normalizing said entities within said span of text further comprises:

selecting those associated entities sharing a predetermined number of features; and normalizing these associated entities to refer to said same entity.

In a second aspect the present invention accordingly provides a method for training a classifier to classify for text based elements in a collection of text based elements according to a characteristic, said method comprising the steps of:

forming a feature vector corresponding to each text based element;
forming a sequence of said feature vectors corresponding to each of said text based elements in said collection of text based elements;
labeling each text based element according to said characteristic thereby forming a sequence of labels corresponding to said sequence of feature vectors; and
training a predictive algorithm based on said sequence of labels and said corresponding sequence of said feature vectors, said algorithm trained to generate new label sequences from an input sequence of feature vectors thereby classifying text based elements that form said input sequence of feature vectors.

In a third aspect the present invention accordingly provides a computer useable medium having computer readable instructions embodied on said medium for causing a computer to perform the method according to any one of the first and second aspects of the invention.

In a fourth aspect the present invention accordingly provides an apparatus adapted to extract a structured record from a document, said apparatus comprising:

processor means adapted to operate in accordance with a predetermined instructions set;
said apparatus in conjunction with said instruction set, being adapted to perform the method steps according to the first aspect of the invention.

In a fifth aspect the present invention accordingly provides an apparatus adapted to train a classifier to classify for text based elements in a collection of text based elements, said apparatus comprising:

processor means adapted to operate in accordance with a predetermined instructions set;
said apparatus in conjunction with said instruction set, being adapted to perform the method steps according to the second aspect of the invention.

**Brief Description of the Figures**

A preferred embodiment of the present invention will be discussed with reference to the accompanying drawings wherein:

FIGURE 1 is a screenshot of an obituary web page;
FIGURE 2 is a screenshot of an executive biography web page;
FIGURE 3 is a screenshot of a job openings web page;
FIGURE 4 is a screenshot of a single obituary web page;
FIGURE 5 is a flowchart of a method for extracting records from a document according to a preferred embodiment of the present invention;
FIGURE 6 is a screenshot of a span labeling tool as employed in a preferred embodiment of the present invention;
FIGURE 7 is a screenshot of an entity labeling tool as employed in a preferred embodiment of the present invention;
FIGURE 8 is a flowchart of the document labeling method according to a preferred embodiment of the present invention;
FIGURE 9 is a flowchart of the span labeling method according to a preferred embodiment of the present invention;
FIGURE 10 is a flowchart of the entity labeling method according to a preferred embodiment of the present invention;
FIGURE 11 is a flowchart of the sub-entity labeling process according to a preferred embodminent of the present invention;
FIGURE 12 is a flowchart of the association labeling method according to a preferred embodmient of the present invention;

FIGURE 13 is a flowchart of the normalization labeling method according to a preferred embodiment of the present invention;

FIGURE 14 is a flowchart of the entity/association/normalization classification labeling method according to a preferred embodiment of the present invention;

FIGURE 15 is a flowchart illustrating the steps involved in training a span extractor to extract spans from labeled documents according to a preferred embodiment of the present invention;

FIGURE 16 is flowchart illustrating the steps involved in running a trained span extractor according to a preferred embodiment of the present invention;

FIGURE 17 is a flowchart illustrating the steps involved in training an entity extractor to extract entities from labeled documents according to a preferred embodiment of the present invention;

FIGURE 18 is a flowchart illustrating the steps involved in running trained entity extractor according to a preferred embodiment of the present invention;

FIGURE 19 is a flowchart illustrating the steps involved in training a sub-entity extractor to extract sub-entities from labeled documents according to a preferred embodiment of the present invention;

FIGURE 20 is a flowchart illustrating the steps involved in running a trained sub-entity extractor according to a preferred embodiment of the present invention;

FIGURE 21 is a flowchart illustrating the steps involved in training an associator to associate entities from labeled documents according to a preferred embodiment of the present invention;

FIGURE 22 is a flowchart illustrating the steps involved in running a trained associator according to a preferred embodiment of the present invention;

FIGURE 23 is a flowchart illustrating the steps involved in training an associator from labeled documents according to a preferred embodiment of the present invention;

FIGURE 24 is an example search application according to a preferred embodiment of the present invention over corporate biographical data extracted from the Australian web. Summary hits from a query on "patent attorney" are shown;

FIGURE 25 is the full extracted record from the first hit in Figure 24; and

FIGURE 26 depicts the cached page from which the record in Figure 25 was extracted.

In the following description, like reference characters designate like or corresponding parts or steps throughout the several views of the drawings.

**Detailed Description of the Invention**

The present invention is concerned with the extraction of structured records from documents in a corpus. Each one of these documents may include one or more "spans" of interest.

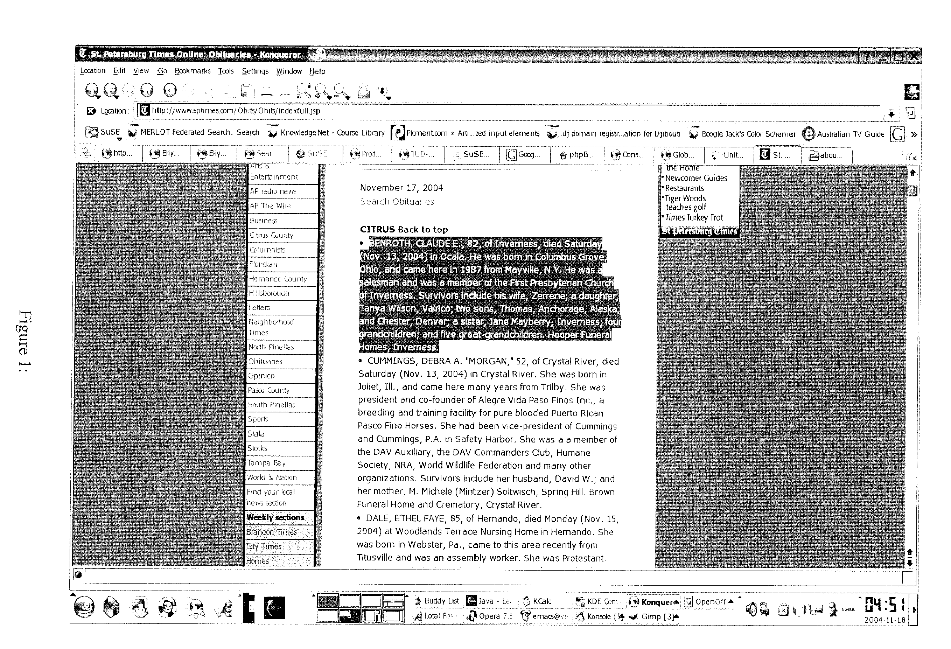

Referring to Figure 1, there is shown a web page from an online newspaper that contains several obituaries (the first is highlighted). In this case the corpus is the collection of all web pages on the newspaper site; the documents of interest are the obituary pages, and each obituary represents a distinct "span" that is to be extracted into its own structured record. In this case the structured record might include the full obituary text, deceased name, age at death, date of birth and other fields such as next-of-kin.

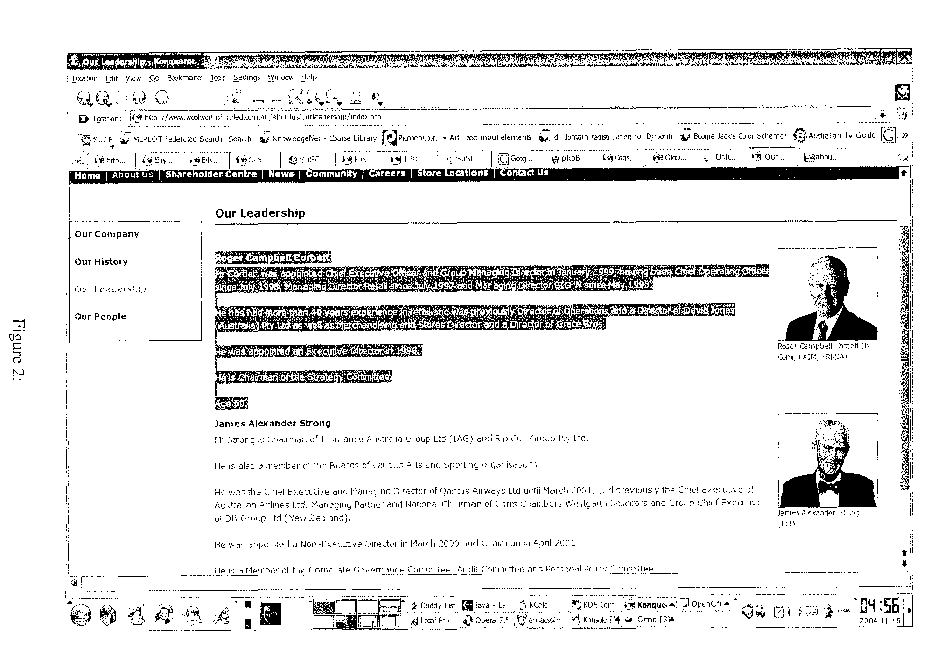

Referring now to Figure 2, there is shown a web page in which the spans of interest are executive biographies. The corpus in this case is the collection of all web pages on the company's website; the documents of interest are the executive biography pages, and the biographical records might include person name, current job title, former job titles, education history, etc.

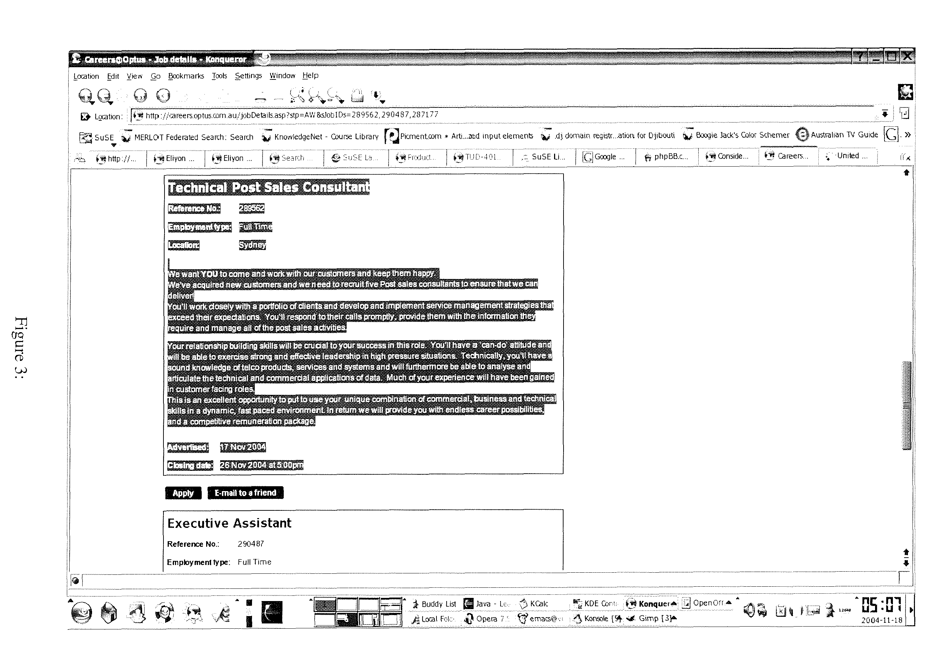

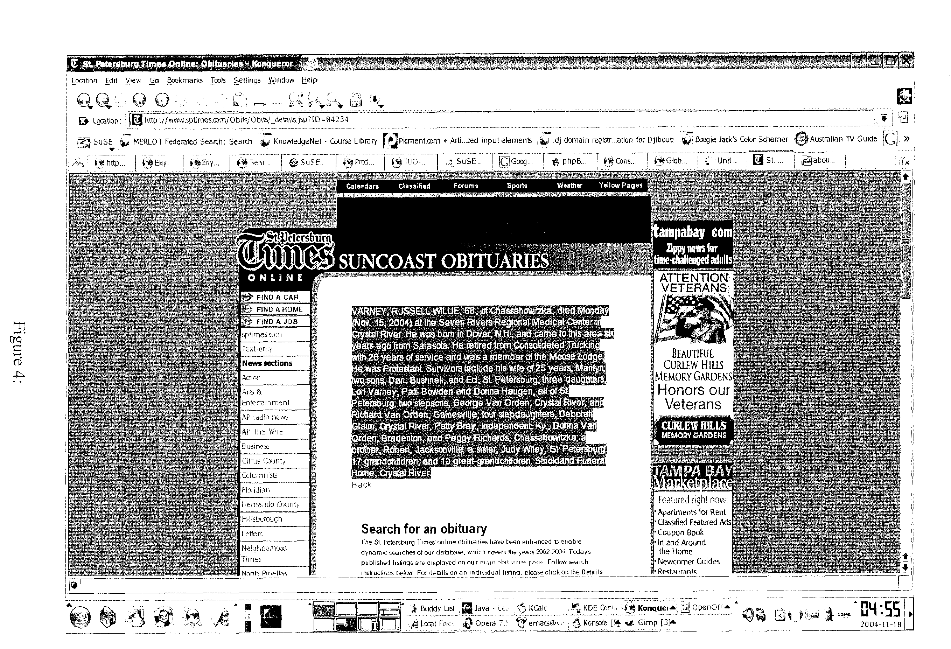

Referring to Figure 3, there is shown a web page in which the spans of interest are open job positions. As for biographies, the corpus is the collection of all web pages on the company's website; the documents of interest are the job pages, and the job records might include title, full or part-time, location, contact information, description, etc. These examples all show multiple spans in each document, but there may also be only one span of interest on a given web page, such as shown in Figure 4.

Clearly, as would be apparent to those skilled in the art, the corpus of documents could be further generalised to include all web pages located on servers originating from a given country domain name or alternatively all web pages that have been updated in the last year.

In this preferred embodiment the application of the present invention is directed to the extraction of structured executive biographical records from corporate web sites. However, as would also be apparent to those skilled in the art, the method of extracting structural records according to the present invention is equally applicable to generating structural records from any text based source.

Accordingly, the goal of the extraction process is to process the web pages in a corporate web site; locate the biographical pages such as the one shown in Figure 2 and to then generate structured records containing the biographical information of each executive. As an illustrative example the structured record could be generated in XML format as follows:

```
<bio>

  <person>

    <full_name>Mr Roger Campbell Corbett</full_name>

    <title>Mr</title>

    <first_name>Roger</first_name>

    <middle_name>Campbell</middle_name>

    <last_name>Corbett</last_name>

  </person>

  <work_history>

    <jobtitle>Chief Executive Officer</jobtitle>

    <current>true</current>

  </work_history>

  <work_history>

    <jobtitle>Group Managing Director</jobtitle>

    <current>true</current>

  </work_history>

  <work_history>

    <jobtitle>Chief Operating Officer</jobtitle>

    <current>false</current>

  </work_history>

  <work_history>

    <jobtitle>Managing Director Retail</jobtitle>
```

```
    <current>false</current>

</work_history>

<work_history>

    <jobtitle>Managing Director</jobtitle>

    <organization>Big W</organization>

    <current>false</current>

</work_history>

<work_history>

    <jobtitle>Director of Operations</jobtitle>

    <organization>David Jones (Australia) Pty Ltd</organization>

    <current>false</current>

</work_history>

<work_history>

    <jobtitle>Director</jobtitle>

    <organization>David Jones (Australia) Pty Ltd</organization>

    <current>false</current>

</work_history>

<work_history>

    <jobtitle>Merchandising and Stores Director</jobtitle>

    <organization>Grace Bros</organization>

    <current>false</current>

</work_history>

<work_history>

    <jobtitle>Director</jobtitle>

    <organization>Grace Bros</organization>

    <current>false</current>
```

```
</work_history>

<work_history>

  <jobtitle>Executive Director</jobtitle>

  <current>true</current>

</work_history>

<work_history>

  <jobtitle>Chairman</jobtitle>

  <group>Strategy Committee</group>

  <current>true</current>

</work_history>

<bio_text>
```

CEO and Group Managing Director

Mr Corbett was appointed Chief Executive Officer and Group Managing Director in January 1999, having been Chief Operating Officer since July 1998, Managing Director Retail since July 1997 and Managing Director BIG W since May 1990.
He has had more than 40 years experience in retail and was previously Director of Operations and a Director of David Jones (Australia) Pty Ltd as well as Merchandising and Stores Director and a Director of Grace Bros.
He was appointed an Executive Director in 1990.
He is Chairman of the Strategy Committee.
Age 60.

```
</bio_text>

</bio>
```

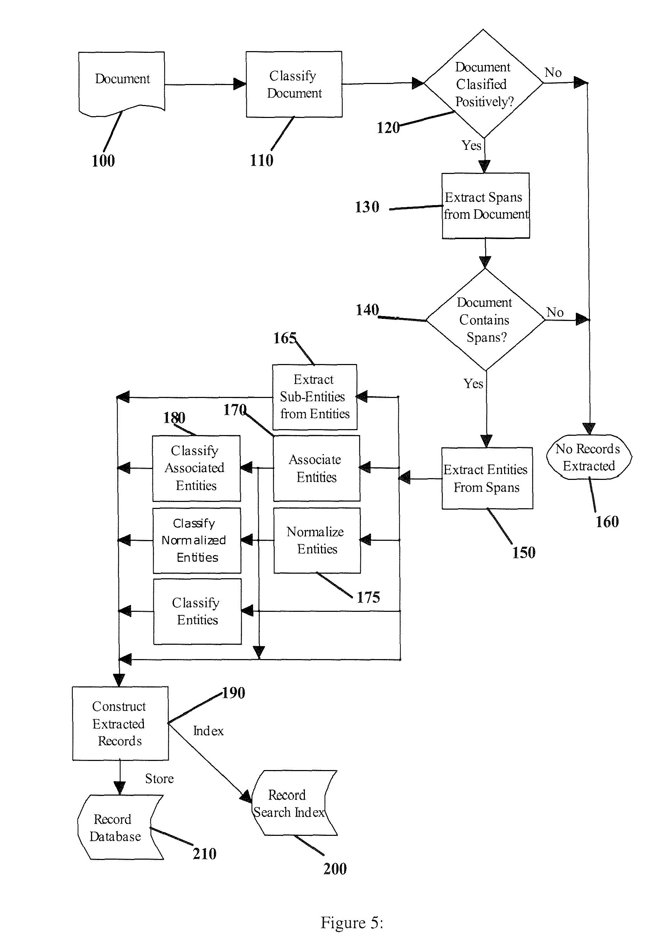

The structured records may then be stored in a database and indexed for search.
Referring now to Figure 5, there is shown a flowchart of the method for extracting a structured record from a document according to the present invention. This process is summarized as follows:

1. *Candidate pages* are generated by a directed crawl from the home page or collection of pages from the corporate web site;

2. Each *candidate page* is classified 110 according to whether it is a page of interest or not;

3. Pages that are positively classified 120 are processed 130 to identify the *spans* (contiguous biographies) of interest;

4. *Spans* are further processed 150 to identify *entities* of interest, such as people and organization names, jobtitles, degrees;

5. Extracted *entities* may be further processed 165 to identify *sub-entities* — for example people names broken down into title, first, middle, last, suffix;

6. Extracted *entities* may be further associated 170 into related groups ⎯ for example jobtitles associated with the correct organization;

7. Extracted *entities* may also be *normalized* 175, for example multiple variants of the same person name may be combined together;

8. Extracted entities, normalized entities, and associated groups of entities may be further classified 180: for example jobtitle/organization pairs categorized into current or former;

9. All the extracted information is formed into a structured record 190;

10. The structured record is stored in a database 210 and indexed for searching 200.

Each step in the process, from classification 110 (step 2) through to normalization 175 (step 7), can be performed using hand-coded rules or in this preferred embodiment with the use of *classifiers* and *extractors* trained using machine learning algorithms. Machine learning algorithms take as input human-labeled examples of the data to be extracted and output a classifier or extractor that automatically identifies the data of interest. Their principal advantage is that they require less explicit domain knowledge. Machine learning algorithms essentially infer domain knowledge from the labeled examples. In contrast, the use of purely hand-coded rules requires an engineer or scientist to explicitly identify and hand-code prior domain knowledge, thereby adding to the expense and development time of extraction tools based on these methods.

In this preferred embodiment, hand-coded rules are used as input to machine learning algorithms. In this manner, the algorithms obtain the benefit of the domain knowledge contained in the rules but can also use the labeled data to find the appropriate weighting to assign to these rules.

As is known in the art, the application of machine learning algorithms requires hand-labeling example data of interest, extracting features from the labeled data, and then training classifiers and extractors based on these features and labels. It is typically an iterative process, in which analysis of the trained extractors and classifiers is used to improve the labeled data and feature extraction process. In some cases many iterations may be required before adequate performance from the trained classifiers and extractors is achieved.

Two of the primary determinants of trained classifier and extractor performance are the number of independent labeled training examples and the extent to which spurious or irrelevant features can be pruned from the training data. Labeled examples that are selected from within the same web site are typically not independent. For example, documents from the same site may share similar structure or biographies from the same site, may use common idioms peculiar to the site.

Most machine learning algorithms can deal with "weighted" training examples in which the significance of each example is reflected by an assigned number between 0 and 1. Thus, in order to generate accurate statistics and to ensure good generalization of the machine learning algorithms to novel sites, labeled training examples can be weighted so that each site is equally significant from the perspective of the machine learning algorithm (i.e. each site has the same weight regardless of the number of examples it contains).

Techniques for pruning features usually rely on statistics computed from the labeled training data. For example, features that occur on too few training examples can be pruned. In a similar fashion, the labeled training examples can be weighted so that each site's examples contributes the same amount to the statistics upon which pruning is based. This leads, for example, to pruning based upon the number of sites that have an example containing a particular feature, rather than the number of examples themselves. This "site-based weighting" approach yields substantially better performance from trained classifiers and extractors than uniform weighting schemes.

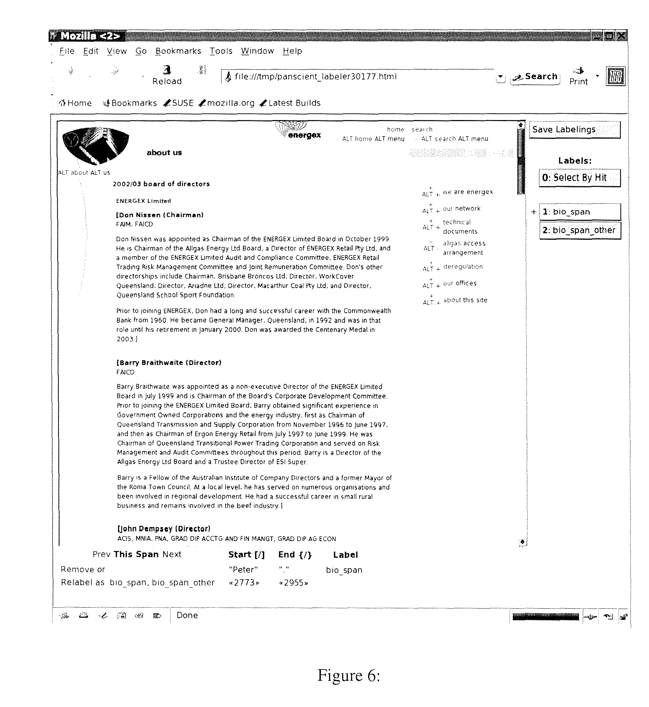

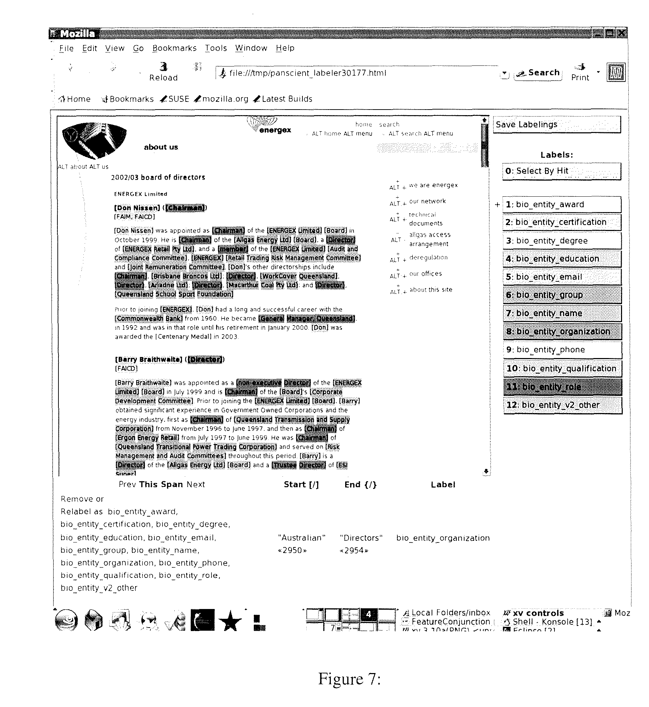

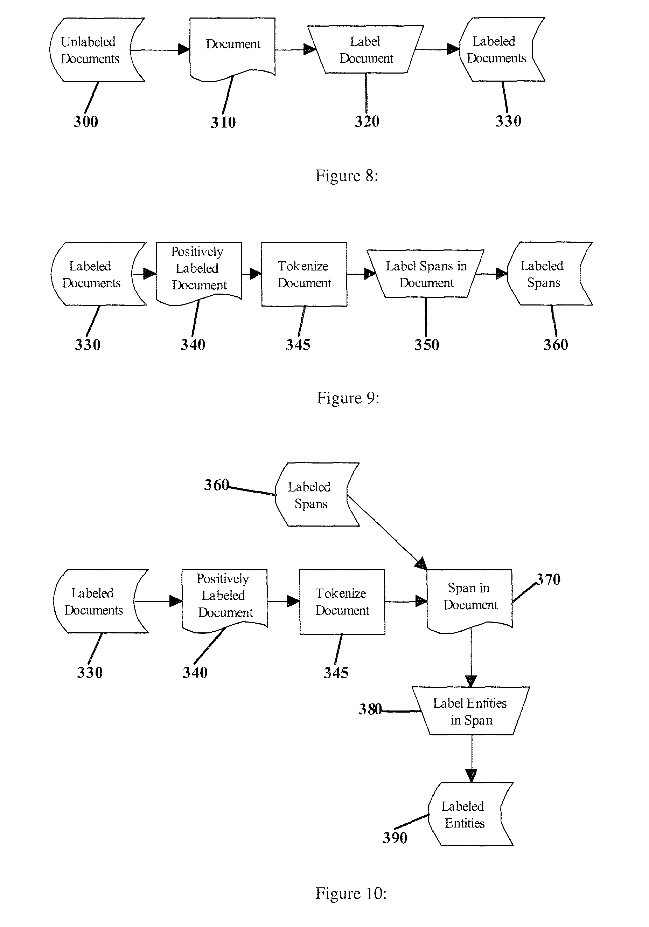

Referring now to Figures 6 and 7 there are shown screenshots of a graphical tool used to label both spans of interest within example web pages and entities of interest within the spans of interest with a view to training a classifier to extract biographical data from a corporate web site according to a preferred embodiment of the present invention. This process of labeling is used at multiple stages throughout the extraction method to train the relevant classifier to classify for the relevant characteristic depending on which step of the extraction method is being performed. The flowcharts of Figures 8-14 describe the steps involved in labeling the various data of interest according to the particular stage of the extraction process.

Referring now to Figure 8, there is shown a flowchart illustrating the process for initially labeling documents of interest from the unlabeled corpus of documents 300. Documents are retrieved 310 from the unlabeled corpus 300 and human-labeled 320 according to the characteristic of interest (for example "biographical page" or "non-biographical page"). The labels assigned to the documents are then stored 330.

Referring now to Figure 9, there is shown the next step in the labeling process wherein the spans of interest within the previously labeled web-pages of interest are labeled. Positively labeled documents 340 (those labeled as biographical pages in the biography extraction application) are retrieved from the labeled document store 330, tokenized 345 into their constituent tokens or text elements (words, numbers, punctuation) and the spans of interest within the documents are labeled or "marked up" 350 (see Figure 6) by a human. The locations of the token boundaries of each span in each document are then stored 360.

Referring now to Figure 10, the next step in the labeling process is to label the entities of interest within each previously labeled span of interest. Positively labeled documents 340 and the locations of their spans 370 are retrieved from the labeled document store 330 and the labeled span store 360 respectively, and the entities of interest within each span are labeled or "marked up" 380 (see Figure 7) by a human. The locations of the boundaries of each entity within each span, and the category (label) of each entity (name, jobtitle, organization, etc) are then further stored 390.

Depending upon the application, there may be one or more labeling steps involved after entity labeling. For example, whole names labeled as entities in the pevious step may need to be broken down into their constituent parts (for example title, first, middle/maiden/nick, last, suffix), different types of entities may need to be associated together (for example jobtitles with their corresponding organization name), or distinct references to the same entity may need to be "normalized" together (for example references to the same person in a biography, as "Jonathan Baxter", "Jonathan" "'Dr Baxter" etc). Entities, normalized entities, or associated entities may also require further classification such as jobtitles/organizations being classified into either former or current.

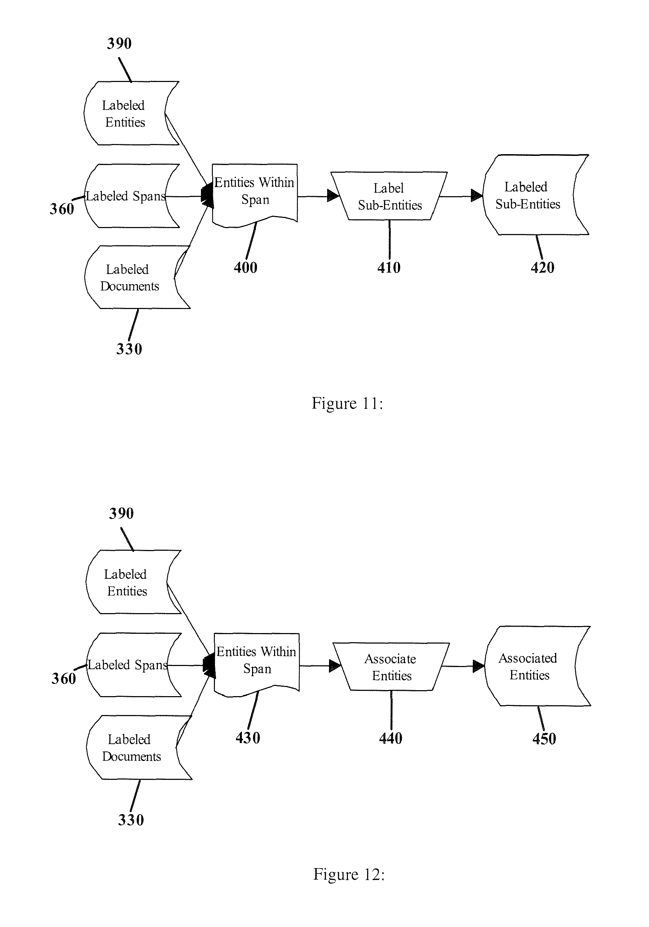

Referring now to Figure 11, positively labeled documents, the locations of their spans, and the locations of the entities within the spans 400 are retrieved from the labeled document store 330, the labeled span store 360, and the labeled entities store 390. The subentities of interest within each entity are labeled or "marked up" 410 by a human. The locations of the boundaries of each sub-entity within each entity, and the sub-entity category (label) are stored 420.

Association labeling involves grouping multiple labeled entities of different types together, for example jobtitle with organization, or degree with school.

Referring now to Figure 12, positively labeled documents, the locations of their spans, and the locations of the entities within the spans 430 are retrieved from the labeled document store 330, the labeled span store 360, and the labeled entities store 390. The associated entities of interest within each span are labeled or "marked up" 440 by a human. The associated entities and their type (label) are stored 450.

Normalization labeling is similar to association labeling in that it involves grouping multiple labeled entities together, however unlike association labeling it involves grouping entities of the same type together. For example grouping "Jonathan Baxter" with "Dr. Baxter" and "Jonathan" within the same biography.

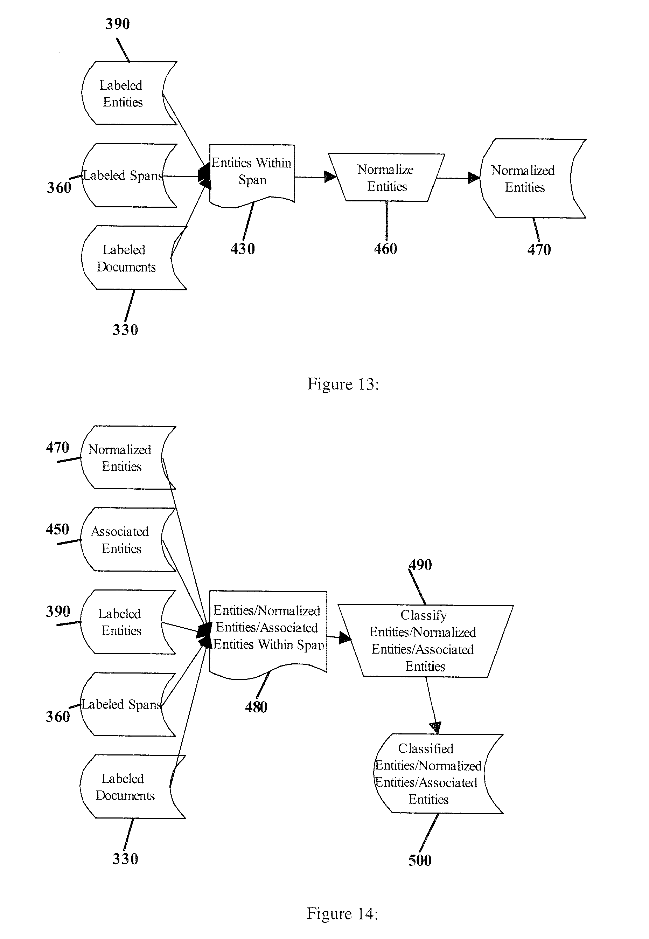

Referring now to Figure 13, positively labeled documents, the locations of their spans, and the locations of the entities within the spans 430 are retrieved from the labeled document store 330, the labeled span store 360, and the labeled entities store 390. The normalized entities of interest within each span are labeled or "marked up" 460 by a human. The normalized entities are stored 470.

Entities, normalized entities, or associated entities may also require further classification such as jobtitles/organizations being classified into either former or current.

Referring now to Figure 14, positively labeled documents, the locations of their spans, the locations of the entities within the spans, and the normalized and associated entities with the span 480 are retrieved from the labeled document store 330, the labeled span store 360, the labeled entities store 390, the labeled associations store 450 and the labeled normalization store 470. The entities/associated entities/normalized entities of interest within each span are classified 490 by a human. The classifications are stored 500.

Refewing once again to Figure 5, document classification step 110 according to a preferred embodiment of the present invention requires classification of text documents into preassigned categories such as "biographical page" versus "non-biographical page". The first step in the machine classification procedure is to extract features from the stored labeled documents 330 (as shown in Figure 8). Standard features include the words in the document, word frequency indicators (for example, binned counts or weights based on other formulae including *tfidf*), words on incoming links, distinct features for words in various document fields including document title, headings (for example html ¡h1¿, ¡h2¿, etc tags), emphasized words, capitalization, indicators of word membership in various lists, such as first-names, last-names, locations, organization names, and also frequency indicators for the lists.

As an illustrative example, consider the HTML document:

```
<html>

  <head>

    <title>Fox Jumping</title>

  </head>

  <body>

    <h1>What the fox did</h1>


    The <b>quick</b> brown fox jumped over

    the <b>lazy</b> dog.

  </body>

</html>
```

Assuming a prespecified list of animal names, the feature vector for this document would then be:

f = [brown, did, dog, fox, jumped, jumping, lazy, over, quick, the, what, ., frequency_3_fox, leadcap_fox, leadcap_jumping, leadcap_the, leadcap_what, title_fox, title_jumping, heading_what, heading_the, neading_fox, heading_did, emphasis_lazy, emphasis_quick, list_animal_fox, list_animal_dog].

In this manner, features are extracted from all documents within the labeled training corpus 330 (as shown in Figure 8), or from a statistical sample thereof. The extracted features and associated labels are stored in a *training index.* Once these features are extracted, many existing methods for training document classifiers may be applied, including decision trees, and various forms of linear classifier, including maximum entropy. Linear classifiers, which classify a document according to a score computed from a linear combination of its features, are in many instances the easiest to interpret, because the significance of each feature may easily be inferred from its associated weight and accordingly in this preferred embodiment the document classification step 110 (as shown in Figure 5) is implemented using a linear classifier trained from the document data labeled according to the process of Figure 8.

Referring back again to Figure 5, the step of span extraction 130, requires the automatic extraction of spans of interest from classified positive documents. With reference to Figures 2 and 6, the text of each individual biography is automatically identified and segmented from the surrounding text.

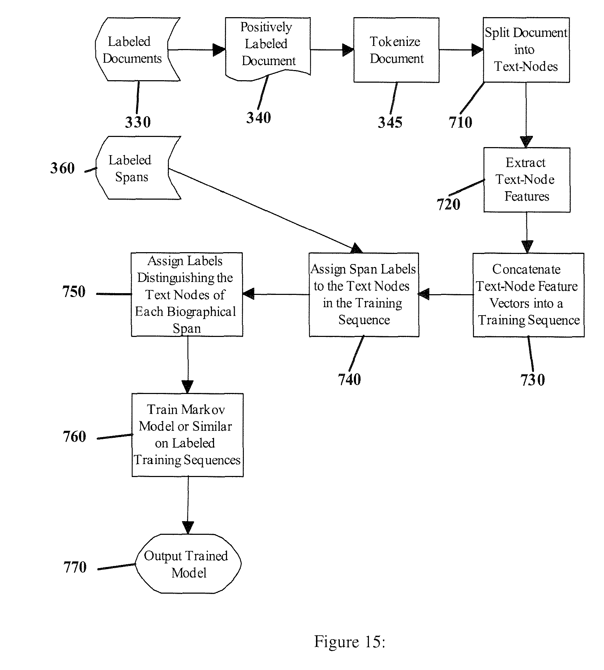

Referring now to Figure 15, there is shown a flowchart illustrating this segmentation process.

1. Positively labeled Documents 340 from the labeled document corpus 330 are tokenized 345 into their constituent tokens or text elements.

2. Text documents can be automatically split into "natural" contiguous regions. In the simplest case a document with no markup can be split on sentence and paragraph boundaries. A document that is "marked up" (such as an HTML document) can be broken into contiguous text node regions. For example, the HTML document:

```
<b>Jonathan Baxter</b>

<p>

CEO

<p>

Jonathan co-founded Panscient Technologies \\

in 2002 ...

<p>

<b>Kristie Seymore</b>

<p>

COO

<p>

...
```

would naturally split into 5 "text nodes": [Jonathan Baxter], [CEO], [Jonathan co-founded Panscient Technologies in 2002...], [Kristie Seymore], [COO]. These regions are "natural" in the sense that their text refers to a particular named entity or are related in some other fashion. In the above example, the first text node contains the subject of the first biography "Jonathan Baxter", the second contains his jobtitle "CEO", while the third contains the first paragraph of Jonathan's biography. The next text node contains the subject of the second biography ("Kristie Seymore"), the following text node is her jobtitle, and so on.

It is important point to note in this example that it is highly unusual for there to be no boundaries between unrelated text. In particular, it would almost never be the case that a single text node contained more than one biography, or obituary, or job, etc.

The tokenized documents in the labeled training corpus are automatically split 710 into their natural contiguous text regions by this method. These regions are generically referred to as "text nodes", regardless of their method of construction.

3. Each segmented text node is processed 720 to generate a vector of features. Such features would usually include indicators for each word in the text node, frequency information, membership of text node words in various lists such as first name, last name, jobtitle and so on. Any feature of the text node that could help distinguish the boundaries between biographies and can be automatically computed should be considered. For example, the feature vector $f$ corresponding to the text node "Jonathan Baxter" might look like:

f = [jonathan, baxter, list_first_name, list_last_name, list_first_name_precedes_list_last_name, first_occurrence_of_last_name]

Here "list_first_name" indicates that the text node contains a first-name, "list_last_name" indicates the same for last-name, "list_first_name_precedes_list_last_name" indicates that the text node contains a first-name directly preceding a last-name, "first_occurrence_of_last_name" indicates that the text node is the first in the document in which the last name "baxter"occurred.

4. The feature vectors from the text nodes in a single document are concatenated 730 to form a feature vector sequence for that document: $[f_1, f_2,...,f_n]$ where $n$ is the number of text nodes in the document.

5. The span labels 360 assigned by the span labeling process (as shown in Figure 9) can be used to induce 740 a labeling of the feature vector sequence $[f_1, f_2,..., f_n]$ by assigning the "bio_span" label to the feature-vectors of those text nodes that fall within a biographical span, and assigning "other" to the remaining feature vectors (in fact, the "other" label does not need to be explicitly assigned - the absence of a label can be interpreted as the "other" label). Here we are relying on the assumption that breaks between biographies do not occur within text nodes.

This generates a sequence of labels $l = [l_1, l_2,..., l_n]$ for each document in 1-1 correspondence with the document's text node feature vector sequence $f = [f_1, f_2,..., f_n]$, where $l_i$ ="bio_span" or $l_i$ ="other".

In order to distinguish a single long biography from two biographies that run together (with no intervening text node), additional labels must be assigned 750 to distinguish boundary text nodes (in both cases the label sequence will be a continuous sequence of "bio_span" hence it is not possible, based on the assigned labels, to determine where the boundary between biographies occurs). One technique is to assign a special "bio_span_start" label to the first text node in a biography. In cases where the data exhibits particularly uniform structure one could further categorize the text nodes and label as such. For example, if all biographies followed the pattern [name,jobtitle,text] (which they often do not) then one could further label the text nodes in the biography as [bio_name, bio_jobtitle, bio_text].

6. The feature vector sequences and their corresponding label sequences for each positively labeled document 340 in the labeled document corpus 330 are then used 760 as training data for standard Markov model algorithms, such as Hidden Markov Models (HMM), Maximum Entropy Markov Models (MEMM) and Conditional Random Fields (CRF). Any other algorithms for predicting label-sequences from feature-vector-sequences could also be used, including hand-tuning of rule-based procedures.

The output 770 of all these algorithms is a model that generates an estimate of the most likely label sequence $[l_1, l_2,... , l_n]$ when presented with a sequence of feature vectors $[f_1, f_2,... , f_n]$.

In the case of Markov models, several different types may be used. Some of the most effective of these for text extraction are algorithms based on Conditional Markov Models. Conditional Markov Models model the likelihood of a sequence of labels $l_1,... l_t$ assigned to a sequence of text node feature-vectors $f_1,..., f_t$ as a linear function of the individual features of each text node. Models commonly employed typically involve hidden-state considerations, including Maximum Entropy Markov Models and Conditional Random Fields.

In this embodiment directed to the extraction of biographical spans, the applicant has found a simpler stateless model to be the most effective. In this model the conditional probability that the label $l$ is assigned to text node $t$ is given by an exponential linear model that is a function of the label assigned to the previous text node $t-1$ and the features $f_t$ of text node $t$:

$$p(l_t = l'|l_{t-1} = l, f_t = f) = \frac{e^{w_{ll'} \cdot f}}{\sum_{l'} e^{w_{ll'} \cdot f}}$$

The log-probability of the entire label sequence is then the sum of the log transition probabilities:

$$\log p(l_1, \ldots, l_t | f_1, \ldots, f_t) = \sum_{t=2}^{t} p(l_t | l_{t-1}, f_t)$$

Accordingly, the parameters $w_{ll'}$ may be trained by computing the gradient with respect to the parameters of the sum of the log-probabilities of a sufficiently large number of training sequences. Then by using any of the standard gradient-ascent procedures, the parameters may be adjusted to maximize the log-probability of the training data.

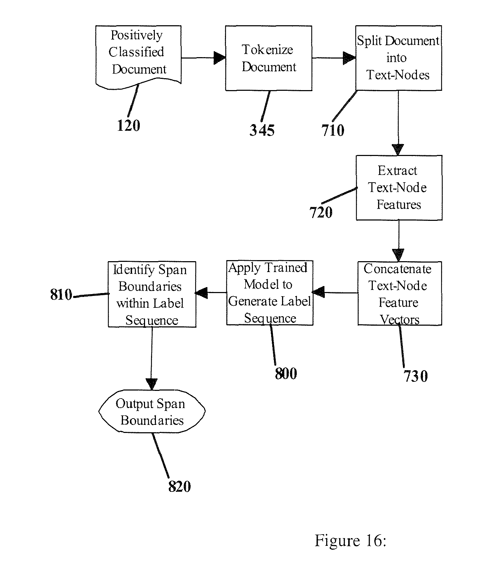

Referring now to Figure 16, once the span extraction model has been trained, it can be applied to the positively classified documents generated at step 120 in Figure 5 by applying steps 345 (tokenize), 710 (split into text nodes), 720 (extract text node features) and 730 (concatenate text node features) of Figure 15, and then applying the model to the feature-vector sequence so obtained to generate 800 the most likely label sequence $[l_1, l_2,..., l_n]$. In the case of a trained Markov model, a label sequence is assigned or computed for an input feature-vector-sequence by choosing the most probable sequence using Viterbi decoding. However, the label sequence may not distinguish the boundaries between adjacent entities of interest.

The label sequence output by the trained model is used to collate contiguous text nodes into individual biographies by identifying 810 specific patterns of labels. The correct pattern will depend on the labels assigned to the training data on which the model was trained. As described previously, it is important that the label sequence be able to distinguish the boundaries between adjacent entities of interest.

As an example, suppose a document with six text nodes contains two distinct biographies, the first spanning text nodes 2 and 3, and the second spanning text nodes 4 and 5. If a Markov model correctly assigns the labels "bio_span" and "other", the sequence of labels it generates for the text nodes in the document will be "other, bio_span, bio_span, bio_span, bio_span, other", which is indistinguishable from the sequence for a document containing a single biography spanning text nodes 2 to 5.

As alluded to earlier, this problem may be addressed by augmenting the label set with a "bio_start" label, and then assigning that label to the first text node of each biography in the training data. The Markov model is then trained to generate all three labels, "bio_span", "bio_span_start", "other", and assuming it correctly assigns the labels to the six text node document, will generate the label-sequence "other, bio_span_start, bio_span, bio_span_start, bio_span, other". The actual biographies may then be extracted correctly as all contiguous sequences of text nodes beginning with a "bio_span_start" node, followed by zero or more "bio_span" nodes.

More generally, any number of "extra" labels may be assigned in the same way as the "bio_span_start" label, used to train the Markov model, and then a regular expression over the label sequences assigned by the model can be used to correctly identify the text node spans of interest. The locations of all such biographical "spans" within a document are then output 820.

Referring back again to Figure 5, entity extraction step 140 requires the extraction of entities of interest from the spans identified at step 130. As shown in Figure 7, each individual entity must be automatically identified and segmented from the text of the surrounding span. Once again, a machine learning-based method is employed by the present invention to train an extractor for performing entity extraction, although other direct (not-trained) methods may also be applicable. The training data used by the machine learning algorithms consists of one example for each labeled span from the positively labeled training documents.

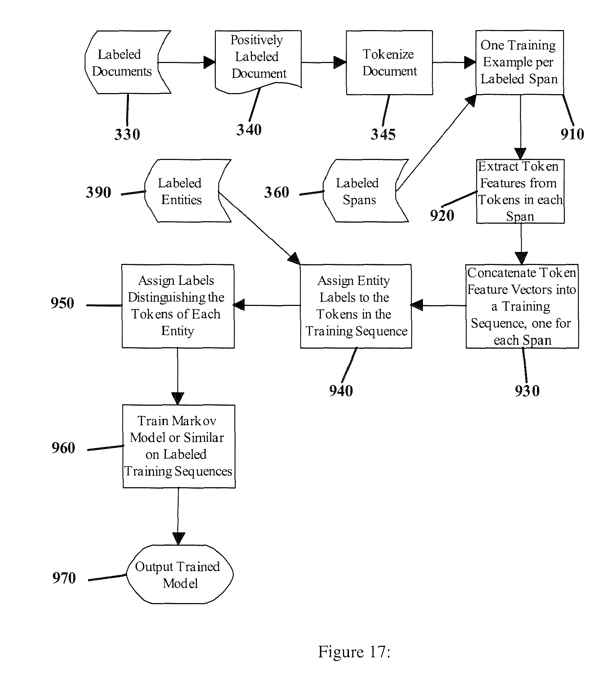

Referring now to Figure 17 there is shown a flowchart illustrating this process:

1. Positively labeled Documents 340 from the labeled document corpus 330 are tokenized 345 into their constituent tokens or text elements. The boundaries of each labeled span with each document are read from the labeled span store 360 and used to segment 910 the tokens of each document into subsequences, one subsequence for each labeled span.

2. A feature vector is extracted 920 from each token in the span. Features extracted from tokens can include word features, capitalization features, list membership, markup indicators (such as emphasis), location indicators (such as "this is the first occurrence of this first-name on the page/span", or "this token is the first, second, third, etc from the start of the span", or "this token is within 4 tokens of the start/end of the span", etc), frequency of tokens within the span or document, etc. Any feature of a token that will help distinguish entities from the surrounding text and can be automatically computed should be considered.

Some other examples of features that are particularly suited for biographical span and entity extraction include:

- features indicating that a text node contains a first name or surname, computed by looking all the text node tokens up in a list of first-names or surnames;
- features indicating that a text node contains only a first name or surname and possibly punctuation;
- features indicating that a text node contains a first name or surname that is not also a standard dictionary word;
- features indicating that a text node contains a first name or surname that is the first occurrence of that first name or surname on any text node within the document (particularly indicative of a text node commencing a biographical span);

A useful addditional step can be to "shift" derived (non-word) features, so that features from surrounding tokens or text elements are applied to the current token or text element.

As a simple example of this shift process, consider the following portion of a tokenized biographical span:

...

```
<b>Jonathan Baxter</b>
```

```
Jonathan Baxter is the CEO of Panscient Technologies.
```

...

Assuming that "Jonathan" is present in a first-name list and that the first occurrence of Jonathan in the span portion is also the first occurrence of "Jonathan" within the surrounding document, the feature-vector for the first "Jonathan" token would be:
f = [jonathan, leadcap_jonathan, list_first_name,
first_in_document_list_first_name,
first_in_span_list_first_name,
location_span_1, html_emphasis,
post_1_list_last_name,
post_1_first_in_document_list_last_name,
post_1_first_in_span_list_last_name,
post_1_html_emphasis]
Note the use of the prefix "post_1" to indicate shifting of derived (non-word) features from the following token ("Baxter") (and that we have made similar assumptions concerning the presence of "Baxter" in a last name list and its occurrence within the document have been made). Obviously features from tokens further afield could be shifted (and prepended with "post_2", "post_3", etc as appropriate), and also shift features from preceding tokens (prepending with "pre_1", "pre_2", etc).

3. The feature vectors from the tokens in a single span are concatenated 930 to form a feature vector sequence for that span: $[f_1, f_2,..., f_n]$ where $n$ is the number of tokens in the span.

4. The entity labels 390 assigned by the entity labeling process (as shown in Figure 10) induces 940 a labeling of the feature vector sequence $[f_1, f_2,..., f_n]$ by assigning the appropriate entity label to the feature-vectors corresponding to tokens or text elements in that entity, and assigning "other" to the remaining feature vectors (as noted previously, the "other" label does not need to be explicitly assigned - the absence of a label can be interpreted as the "other" label). This generates a sequence of labels $l = [l_1, l_2,... , l_n]$ for each span in 1-1 correspondence with the feature vector sequence $f = [f_1, f_2,... , f_n]$ over tokens in the span. The label assigned to each token will depend upon the entity containing the token. For example, assuming that job titles, person names, and organization names are labeled as distinct entities during the entity labeling process of Figure 10, the label sequence for the example of item 2 above would be:
1 = [name, name, name, name, other, other,
jobtitle, other, organization,
organization, other]
corresponding to the token sequence
[Jonathan, Baxter, Jonathan, Baxter,
is, the, CEO, of, Panscient, Technologies, .]
In order to distinguish a single long entity from two entities that run together (with no intervening token, such as the adjacent occurrences of "Jonathan Baxter" above), additional labels must be assigned 950 to distinguish boundary tokens within entities. As with span extraction, one technique is to assign a special 'start" label to the first token in an entity, eg "name_start" or "organization_start". End tokens can also be qualified in the same way "name_end" or "organization_end". Assuming the use of qualifying start labels, the label sequence set out above would become:

1 = [name_start, name, name_start, name, other,
other, jobtitle_start,
other, organization_start, organization, other]

5. The feature vector sequences and their corresponding label sequences for each labeled span in a positively labeled document 340 in the labeled document corpus 330 are then used 960 as training data for standard Markov model algorithms, such as Hidden Markov Models (HMM), Maximum Entropy Markov Models (MEMM) and Conditional Random Fields (CRF) as discussed previously.
The output 970 of all these algorithms is a trained model that generates an estimate of the most likely label sequence $[l_1, l_2,..., l_n]$ when presented with a sequence of feature vectors $[f_1, f_2,..., f_n]$ corresponding to a token sequence from a segmented span.

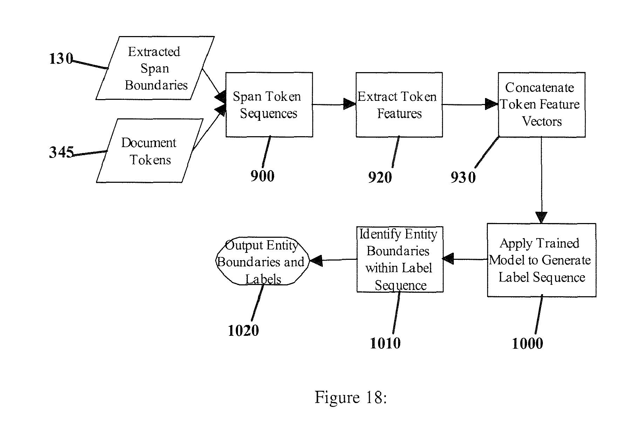

Referring now to Figure 18, once the entity extraction model has been trained, it can be applied to generate entities from each extracted span as follows:

1. Take the span boundaries output 130 by the span extractor (item 820 in Figure 16) and the document token sequence 345 generated from the positively labeled documents (item 120 in Figure 5) and generate 900 the token subsequence for each span.

2. Generate 920 a feature-vector for each token in the span token subsequence with the same feature extraction process used to generate the training sequences (item 920 in Figure 15), and concatenate 930 the feature vectors to form a feature-vector sequence.

3. Apply 1000 the trained entity extraction model (item 970 in Figure 17) to the feature-vector sequence to generate the most likely label sequence $[l_1, l_2,..., l_n]$.

4. The label sequence output by the trained model is used to collate contiguous tokens into individual entities by identifying 1010 specific patterns of labels. The correct pattern will depend on the labels assigned to the training data on which the model was trained. For example, if the first token in each training entity was labeled "name_start" (or "organization_start", or "jobtitle_start", etc), then individual names (organizations, jobtitles, etc) within the label sequence output by the trained model will consist of the token with the "name_start" label followed by all tokens with the "name" label. The locations of all such entities within a document and their category (name, organization, jobtitle, etc) are output 1020.

In a similar manner, the sub-entity extraction step 165 as shown in Figure 5 requires the automatic extraction of sub-entities of interest from the entities identified at step 150. Not all entities will necessarily require sub-entity extraction, the prototypical example is extraction of name parts (for example title, first, middle/maiden/nick, last, suffix) from full-name entities. Again a machine learning-based method is employed in a preferred embodiment of the present invention to train an extractor for performing sub-entity extraction, although other direct (not trained) methods are also applicable. The training data used by the machine learning algorithms consists of one example for each labeled entity from the positively labeled training documents. The training procedure is similar to that used to extract entities from within spans, and with some simplification may be described as the same process with "span" replaced by "entity" and "entity" replaced by "sub-entity".

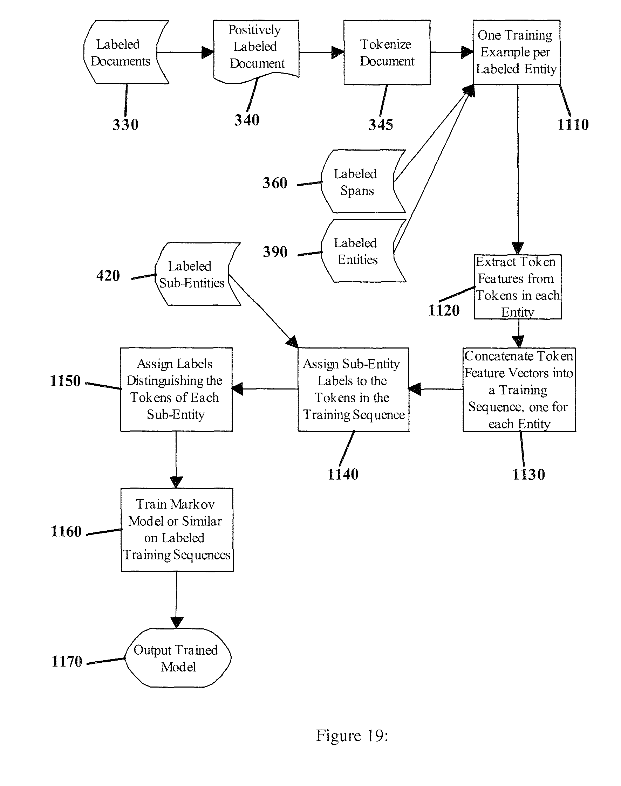

Referring now to Figure 19, there is shown a flowchart illustrating the steps involved in training a sub-entity extractor. The main deviation points from the entity extractor training as illustrated in Figure 17 are:

1. there is one training example per labeled entity 1110, rather than one training example per labeled span (item 910 in Figure 15);

2. feature extraction 1120 for the tokens within each entity will not include some of the features extracted (item 920 in Figure 15) for entities within spans that only make sense at the span-level, such as offset from the start of the span, and will include additional features that only make sense at the entity level, such as offset from the start of the entity.

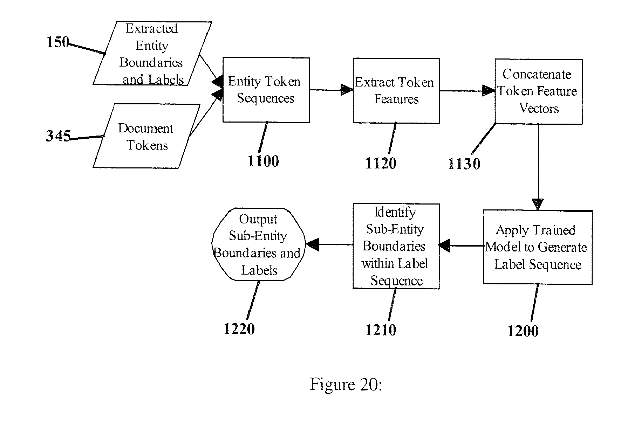

Apart from these deviations, the method of training a sub-entity extractor parallels that for training an entity extractor.
Similarly, the procedure for applying the trained sub-entity extractor to extract sub-entities as illustrated in Figure 5 at step 165 parallels that of applying the trained entity extractor at step 150, and is shown in Figure 20. The main deviation points from applying an entity extractor are:

1. the model operates over feature-vector sequences 1130 constructed from the tokens in each entity, not the tokens from the entire span;

2. feature extraction 1120 for the tokens within each entity will be the same as that used when generating the training features for subentity extraction;

3. the output of the process 1220 are sub-entity boundaries and their categories within each entity;

Thus these methods can be used broadly to classify and extract text based elements of a document such as a span, entity or sub-entity by separating a document into regions corresponding to the text based elements, forming feature vectors corresponding to each text based element and subsequently a feature vector sequence corresponding to the document. This feature vector sequence can be associated with a label sequence and in combination these two sequences may be used to train predictive algorithms which may then be applied accordingly to other documents.

Referring once again to Figure 5, entity association step 170 requires the automatic association of entities identified at step 150. In the biography example, job titles need to be associated with the corresponding organization.

Using the example of "Mr Roger Campbell Corbett" whose biographical details are listed in the web page illustrated in Figure 2, at the end of the entity extraction step 150 the system will have extracted his jobtitles: Chief Executive Officer, Group Managing Director, Chief Operating Officer, Managing Director Retail, Managing Director, etc, and the organizations mentioned in the biography: Big W, David Jones (Australia) Pty Ltd, Grace Bros. Several of the jobtitiles are not associated with any of the organizations mentioned in the biography (for example Chief Executive Officer) and in some cases there is more than one jobtitle associated with the same organization (for example he was previously "Merchandising and Stores Director" *and* "Director" of Grace Bros). According to a preferred embodiment of the present invention an automated method of associating extracted jobtitles with their corresponding organization is provided.

A machine learning-based method is employed by the present invention to train entity associators, although other direct (not trained) methods are also applicable. A distinct associator is trained for each different type of association (eg jobtitle/organization association). In this case, the training data used by the machine learning algorithms consists of one example for each pair of labeled entities (of the appropriate types) from each labeled span (item 360 in Figure 9).

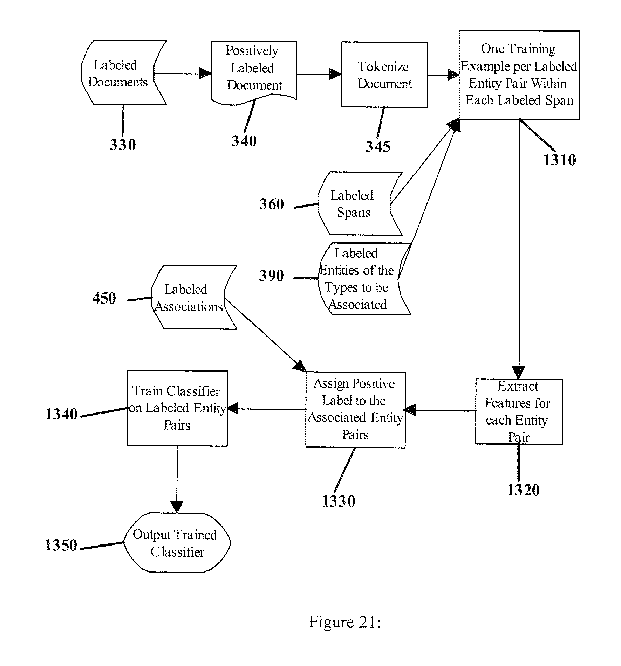

Referring now to Figure 21:

1. Positively labeled Documents 340 from the labeled document corpus 330 are tokenized 345 into their constituent tokens. The token boundaries of each labeled span within each document are read from the labeled span store 360, and the locations of the entities to be associated are read from the labeled entity store 390. Each entity pair of the appropriate type within the same span generates a distinct training example 1310. For example, in the case of "Mr Roger Campbell Corbett" above, each of the jobtitles and each of the organizations from his biographical span will form a distinct training pair: $N * M$ training pairs in total if there are $N$ jobtitles and $M$ organizations.

2. A feature vector is extracted 1320 from each entity pair. Features extracted from pairs of entities can include the words within the entities, the words between the entities, the number of tokens between the entities, the existence of another entity between the entities, indication that the two entities are the closest of any pair, etc. Any feature of an entity pair that will help distinguish associated entities from non-associated entities and can be automatically computed should be considered.

3. The positive associations for the current span are read from the labeled associations store 450 (generated by the association labeling process (as shown in Figure 12) and the "positive" label ("associated") is assigned 1330 to the feature vectors of the corresponding entity pairs. All association pairs that are not positively labeled are assigned the "not-associated" or "other" label.

4. The feature vectors for each entity pair and their corresponding labels are then used 1340 as training data to train a classifier to distinguish associated from non-associated pairs. Any classifier training algorithm will do, including hand-building rule-based algorithms although automated methods usually perform better.

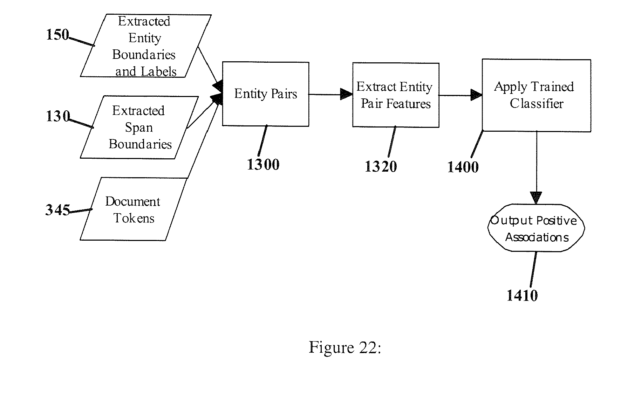

The output 1350 of all these algorithms is a trained classifier that assigns either the "associated" or "not-associated" label to a feature vector from an entity pair. Referring now to Figure 22, once the associator has been trained, it can be applied to classify entity pairs within each extracted span as follows:

1. Take the extracted span boundaries 130 output by the span extractor (item 820 in Figure 16), the extracted entities and their labels 150 output by the entity extractor (item 1020 in Figure 18), and the document token sequence 345 and generate 1300 the entity pairs for the association task (eg all jobtitle/organization pairs). One method for speeding up the association process is to generate only those pairs that pass some test, such as only those pairs within a certain token distance (in most association tasks, if the entities are too far apart they are very unlikely to be associated).

2. Generate 1320 the feature-vector for each candidate entity pair using the same feature extraction process used to generate the training feature vectors (item 1320 at Figure 21).

3. Apply 1400 the trained associator (item 1350 at Figure 21) to the feature-vector.

4. Output 1410 the positively classified associations.

Referring once again to Figure 5, entity normalization step 175 requires the automatic normalization of entities identified at step 150. Normalization is taken to mean the identification of equivalent entities. For example, after successful entity extraction from the following (truncated) biography:

```
    . . .



    <b>Dr Jonathan Baxter</b>

    Jonathan is the CEO of Panscient Technologies.

    . . .
```

the system should have identified "Dr Jonathan Baxter" and "Jonathan" as separate names. We wish to identify the fact that the two names refer to the same person. This is a special case of association in which the entities being associated shared the same label ("name" in this case), hence the entire association procedure described above applies. Feature extraction for normalization may be facilitated by performing sub-entity extraction first. For example, if the "Jonathan" token in each entity above had already been identified as a first name (by the name sub-entity extractor) then a natural feature of the entity pair would be "shares_first_name".

Referring once again to Figure 5, classification of "Entities/Associated Entities/Normalized Entities" at step 180 requires the automatic classification of entities, associated entities, and normalized entities identified at steps 150, 170 and 175 respectively. For example, an associated jobtitle/organization pair from a biography may need to be classified as either a *current* or *former* job. Or if more than one person is mentioned in the biography, each normalized person may need to be classified as to whether they are the subject of the biography or not.

These three classification tasks may be grouped together because they all possess a similar structure. Accordingly, association classification is focused on as normalization and entity classification are straightforward generalizations of the same approach. A machine learning based approach is the preferred method for training association classifiers, although other direct (not-trained) methods are also applicable. In this case, the training data used by the machine learning algorithms consists of one example for each labeled association (of the appropriate type) (item 500 at Figure 14).

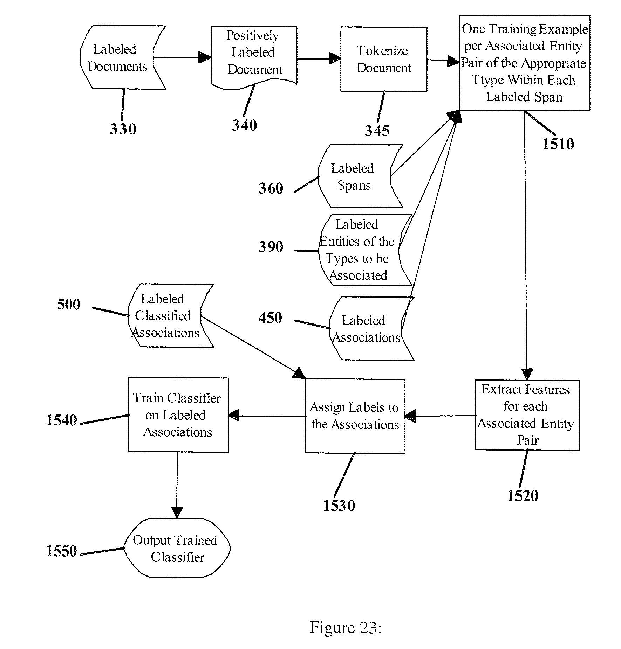

Referring now to Figure 23:

1. Positively labeled Documents 340 from the labeled document corpus 330 are tokenized 345 into their constituent tokens. The token boundaries of each labeled span within each document are read from the labeled span store 360, the identities of the associated entities of the appropriate type are read from the association store 450, and the locations of the entities in each association are read from the labeled entity store 390. Each associated entity pair of the appropriate type generates a distinct training example 1510.

2. A feature vector is extracted 1520 from each associated entity pair. Features extracted from pairs of entities can include the words within the entities, the words between the entities, the words surrounding the entities, the location of the first entity within its containing span, etc. Any feature of an associated pair of entities that will help distinguish it from its differently-classified brethren and can be automatically computed should be considered (for example, features that help to distinguish former jobtitles from current jobtitles include a past-tense word (was, served, previously, etc) immediately or nearly immediately preceding the first entity in the association: "he *previously served* as *Chairman of Telstra*".

3. The labels for each association are read from the classified associations store 500 (generated by the labeling process of Figure 14) and assigned 1530 to the feature vectors of the corresponding associations.

4. The feature vectors for each association and their corresponding labels are then used 1540 as training data to train a classifier to distinguish associations of different categories. Any classifier training algorithm will do, including hand-building rule-based algorithms although automated methods usually perform better.
The output 1550 of all these algorithms is a trained classifier that assigns the appropriate label to the feature vector of an association.

Once the association classifier has been trained, it is straightforward to apply it to classify associations within each extracted span: Take the associations output by the associator (item 170 in Figure 5 and item 1410 in Figure 22), and the document token sequence 345 and generate the feature vectors for each association using the same feature extraction process used to generate the training feature vectors (1520, Figure 23). Apply the trained association classifier to the feature-vectors and output the positively classified associations.

Once all extraction steps have been performed on a document, the extracted spans, entities, associations and classification are assembled 190 into a structured *record* such as the XML document referred to above. This is a relatively straightforward process of populating the fields in a template. Referring to Figure 5, the extracted records are then stored 210 in a database and indexed 220 for search, so that records may be retrieved by querying on different extracted fields such as name, job title, etc.

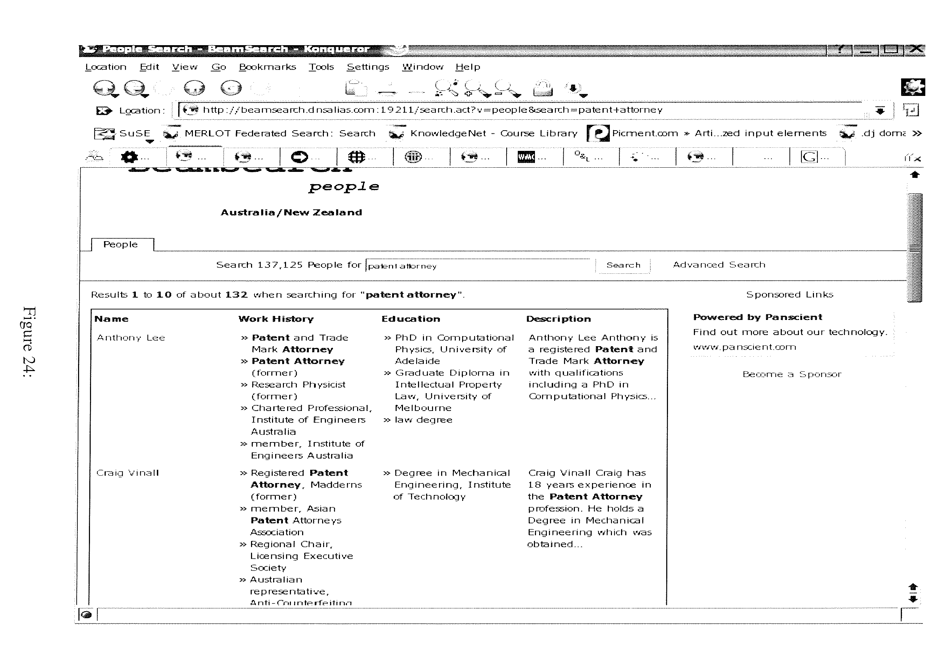

An example application of a preferred embodiment of the present invention to extraction of biographies from corporate web sites is shown in Figures 24, 25, and 26.

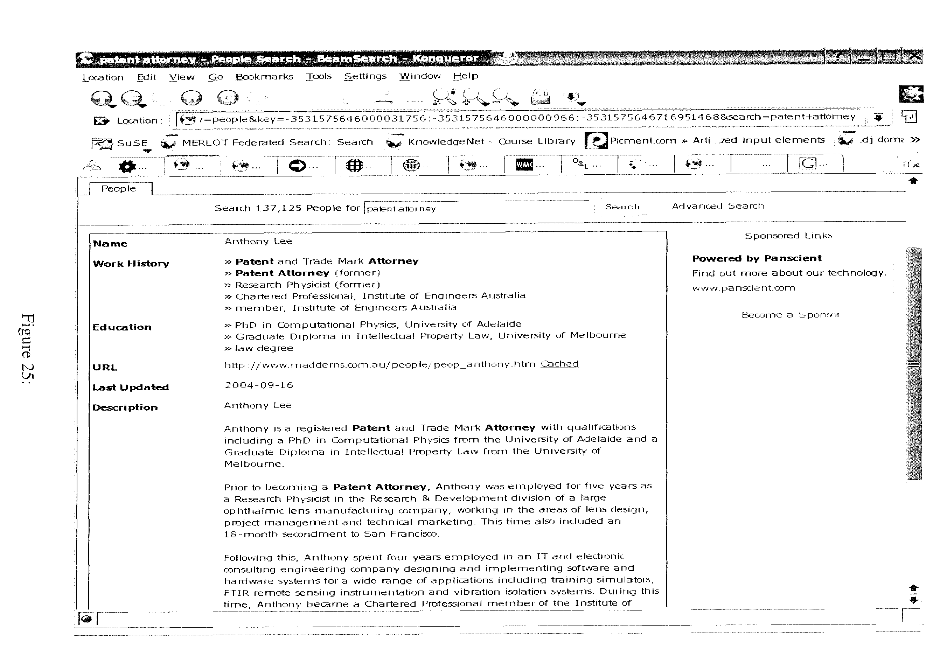

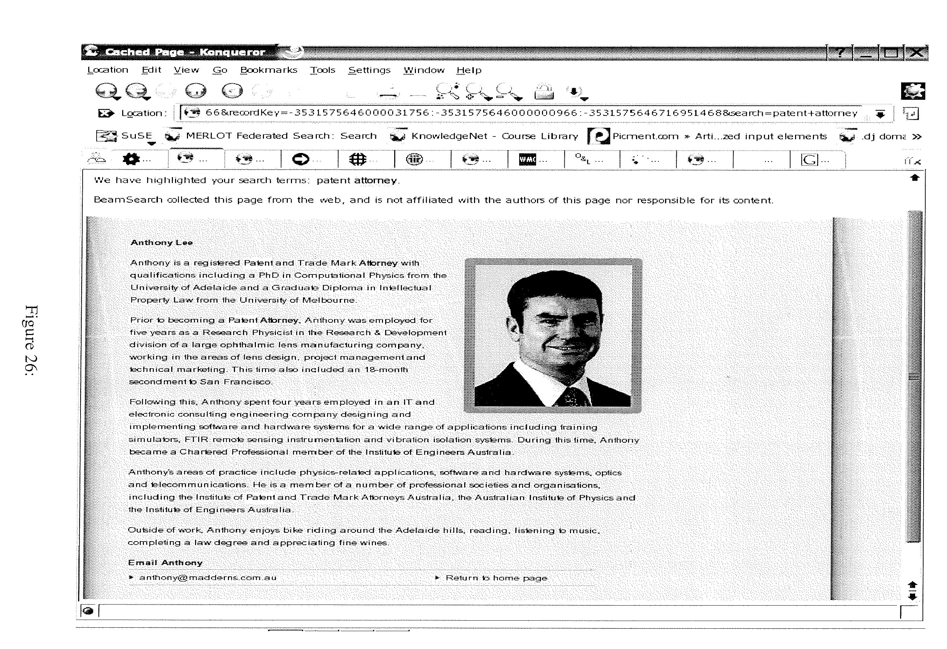

Figure 24 shows summary hits from the query "patent attorney" over the extracted biographical data. Figure 25 shows the full record of the first hit, and Figure 26 shows the cached page from which the biographical information was automatically extracted.

The steps taken by the system to extract, store and index such records is essentially hierarchical in nature, with the first step being identification of the documents of interest within a web site, then identification of *spans* (contiguous text) of interest within each document of interest, followed by identification of the *entities* of interest (names, jobtitiles, degrees, etc) within each span, then the subentities within the entities (if appropriate), classification and association of entities into groups, construction of a full record from the extracted data and then storage and index of the extracted records.

This top down approach addresses a number of disadvantages in prior art systems in that the biography span extractor can exploit the fact that it is operating over a known biography page, so it can employ features such as "this is the first time this name has occurred in this page" which is much more relevant to extracting spans related to biographies. Based on the knowledge that a span relates to a biography the extractor can then more reliably extract entities from an already segmented biography as it is known that the biography relates to a single person thereby allowing for more relevant features to be chosen to aid the extraction process.

Although a preferred embodiment of the present invention has been described in the foregoing detailed description, it will be understood that the invention is not limited to the embodiment disclosed, but is capable of numerous rearrangements, modifications and substitutions without departing from the scope of the invention as set forth and defined by the following claims.

"Comprises/comprising" when used in this specification is taken to specify the presence of stated features, integers, steps or components but does not preclude the presence or addition of one or more other features, integers, steps, components or groups thereof.

**Claims**

1. A method for extracting a structured record from a document, said structured record including information related to a predetermined subject matter, said information to be organized into categories within said structured record, said method comprising the steps of:

   identifying a span of text in said document according to criteria associated with said predetermined subject matter; and
   processing said span of text to extract at least one text element associated with at least one of said categories of said structured record from said document.

**2.** The method for extracting a structured record from a document as claimed in claim 1, wherein said step of processing said span of text further comprises:

identifying an entity within said span of text, said entity including at least one entity text element, wherein said entity is associated with at least one of said categories of said structured record.

**3.** The method for extracting a structured record from a document as claimed in claim 2, wherein said step of processing said span of text further comprises:

identifying a sub-entity within said entity, said sub-entity including at least one sub-entity text element, wherein said sub-entity is associated with at least one of said categories of said structured record.

**4.** The method for extracting a structured record from a document as claimed in claim 3, wherein said step of processing said span of text further comprises:

comprises:

where a plurality of said entity are identified, associating said entities within said span of text, wherein said step of associating said entities includes linking related entities together for storage in a category of said structured record.

**5.** A method for extracting a structured record from a document as claimed in claim 4, wherein said step of processing said span of text further comprises:

normalizing said entities within said span of text, wherein said step of normalizing said entities includes determining whether two or more identified entities refer to the same entity that is to be organized in a category of said structured record.

**6.** A method for extracting a structured record from a document as claimed in any one of claims 1 to 5, wherein said step of identifying a span of text further comprises:

dividing said document into a plurality of text nodes, said text nodes each including at least one text element; generating a text node feature vector for each of said text nodes, said text node feature vector generated in part according to features relevant to said criteria, thereby generating a text node feature vector sequence for said document; and
calculating a text node label sequence corresponding to said text node feature vector sequence, said text node label sequence calculated by a predictive algorithm adapted to generate said text node label sequence from an input text node feature vector sequence, wherein said labels forming said text node label sequence identify a given text node as being associated with said predetermined subject matter, thereby identifying said span of text.

**7.** A method for extracting a structured record from a document as claimed in claim 6, wherein said predictive model is a classifier based on a Markov model trained on labeled text node feature vector sequences.

**8.** A method for extracting a structured record from a document as claimed in claim 6, wherein said predictive model is a hand tuned decision tree based procedure.

**9.** A method for extracting a structured record from a document as claimed in any one of claims 2 to 8, wherein said step of identifying an entity within said span of text further comprises:

dividing said span of text into a plurality of text elements;
generating an entity feature vector for each of said text elements, said entity feature vector generated in part according to features relevant to said criteria, thereby generating an entity feature vector sequence for said span of text; and
calculating an entity label sequence corresponding to said entity feature vector sequence, said entity label sequence calculated by a predictive algorithm adapted to generate said entity label sequence from an input entity feature vector sequence, wherein said labels forming said entity label sequence identify a given entity text element as being associated with said entity.

**10.** A method for extracting a structured record from a document as claimed in claim 9, wherein said predictive model is a classifier based on a Markov model trained on labeled entity feature vector sequences.

**11.** A method for extracting a structured record from a document as claimed in claim 9, wherein said predictive model is a hand tuned decision tree based procedure.

**12.** A method for extracting a structured record from a document as claimed in any one of claims 3 to 11, wherein said step of identifying a sub-entity within said entity further comprises:

   dividing said entity into a plurality of text elements;
   generating a sub-entity feature vector for each of said text elements, said sub-entity feature vector generated in part according to features relevant to said criteria, thereby generating a sub-entity feature vector sequence for said entity; and
   calculating a sub-entity label sequence corresponding to said sub-entity feature vector sequence, said sub-entity label sequence calculated by a predictive algorithm adapted to generate said sub-entity label sequence from an input entity feature vector sequence, wherein said labels forming said sub-entity label sequence identify a given sub-entity text element as being associated with said sub-entity.

**13.** A method for extracting a structured record from a document as claimed in claim 12, wherein said predictive model is a classifier based on a Markov model trained on labeled sub-entity feature vector sequences.

**14.** A method for extracting a structured record from a document as claimed in claim 12, wherein said predictive model is a hand tuned decision tree based procedure.

**15.** A method for extracting a structured record from a document as claimed in any one of claims 4 to 14, wherein said step of associating said entities within said span of text further comprises:

   forming pairs of entities to determine if they are to be associated;
   generating an entity pair feature vector for each pair of entities, said entity pair feature vector generated in part according to features relevant to associations between entity pairs;
   calculating an association label based on said entity pair feature vector to determine if a given pair of entities are linked, said association label calculated by a predictive algorithm adapted to generate said association label from an input entity pair feature vector.

**16.** A method for extracting a structured record from a document as claimed in claim 15, wherein said step of forming pairs of entities to determine if they are to be associated further comprises:

   forming only those pairs of entities which are within a predetermined number of text elements from each other.

**17.** A method for extracting a structured record from a document as claimed in any one of claims 5 to 16, wherein said step of normalizing said entities within said span of text further comprises:

   selecting those associated entities sharing a predetermined number of features; and normalizing these associated entities to refer to said same entity.

**18.** A method for training a classifier to classify for text based elements in a collection of text based elements according to a characteristic, said method comprising the steps of:

   forming a feature vector corresponding to each text based element;
   forming a sequence of said feature vectors corresponding to each of said text based elements in said collection of text based elements;
   labeling each text based element according to said characteristic thereby forming a sequence of labels corresponding to said sequence of feature vectors; and
   training a predictive algorithm based on said sequence of labels and said corresponding sequence of said feature vectors, said algorithm trained to generate new label sequences from an input sequence of feature vectors thereby classifying text based elements that form said input sequence of feature vectors.

**19.** A method for training a classifier to classify for text based elements in a collection of text based elements according to claim 18, wherein said text based element is a span of text elements and said collection of text based elements is a document.

20. A method for training a classifier to classify for text based elements in a collection of text based elements according to claim 18, wherein said text based element is an entity comprising at least one text element and said collection of entities forms a span of text elements.

21. A method for training a classifier to classify for text based elements in a collection of text based elements according to claim 18, wherein said text based element is a sub-entity comprising at least one text element and said collection of text based elements is an entity.

22. A computer useable medium having computer readable instructions embodied on said medium for causing a computer to perform the method of any one of claims 1 to 21.

23. An apparatus adapted to extract a structured record from a document, said apparatus comprising:

   processor means adapted to operate in accordance with a predetermined instructions set;
   said apparatus in conjunction with said instruction set, being adapted to perform the method steps of any one of claims 1 to 17.

24. An apparatus adapted to train a classifier to classify for text based elements in a collection of text based elements, said apparatus comprising:

   processor means adapted to operate in accordance with a predetermined instructions set;
   said apparatus in conjunction with said instruction set, being adapted to perform the method steps of any one of claims 18 to 21.

Figure 1:

EP 1 669 896 A2

St. Petersburg Times Online: Obituaries - Konqueror

Location  Edit  View  Go  Bookmarks  Tools  Settings  Window  Help

Location: http://www.sptimes.com/Obits/Obits/indexfull.jsp

SuSE   MERLOT Federated Search: Search   KnowledgeNet - Course Library   Picment.com * Arti...zed input elements   .dj domain registr...ation for Djibouti   Boogie Jack's Color Schemer   Australian TV Guide   G  »

http...   Eliy...   Eliy...   Sear...   SuSE.   Prod...   TUD-...   SuSE...   Goog...   phpB...   Cons...   Glob...   Unit...   St. ...   abou...

Arts &
Entertainment

AP radio news

AP The Wire

Business

Citrus County

Columnists

Floridian

Hernando County

Hillsborough

Letters

Neighborhood
Times

North Pinellas

Obituaries

Opinion

Pasco County

South Pinellas

Sports

State

Stocks

Tampa Bay

World & Nation

Find your local
news section

**Weekly sections**

Brandon Times

City Times

Homes

November 17, 2004

Search Obituaries

**CITRUS** Back to top

• BENROTH, CLAUDE E., 82, of Inverness, died Saturday (Nov. 13, 2004) in Ocala. He was born in Columbus Grove, Ohio, and came here in 1987 from Mayville, N.Y. He was a salesman and was a member of the First Presbyterian Church of Inverness. Survivors include his wife, Zerrene; a daughter, Tanya Wilson, Valrico; two sons, Thomas, Anchorage, Alaska, and Chester, Denver; a sister, Jane Mayberry, Inverness; four grandchildren; and five great-grandchildren. Hooper Funeral Homes, Inverness.

• CUMMINGS, DEBRA A. "MORGAN," 52, of Crystal River, died Saturday (Nov. 13, 2004) in Crystal River. She was born in Joliet, Ill., and came here many years from Trilby. She was president and co-founder of Alegre Vida Paso Finos Inc., a breeding and training facility for pure blooded Puerto Rican Paso Fino Horses. She had been vice-president of Cummings and Cummings, P.A. in Safety Harbor. She was a a member of the DAV Auxiliary, the DAV Commanders Club, Humane Society, NRA, World Wildlife Federation and many other organizations. Survivors include her husband, David W.; and her mother, M. Michele (Mintzer) Soltwisch, Spring Hill. Brown Funeral Home and Crematory, Crystal River.

• DALE, ETHEL FAYE, 85, of Hernando, died Monday (Nov. 15, 2004) at Woodlands Terrace Nursing Home in Hernando. She was born in Webster, Pa., came to this area recently from Titusville and was an assembly worker. She was Protestant.

the Home
• Newcomer Guides
• Restaurants
• Tiger Woods
  teaches golf
• Times Turkey Trot

St. Petersburg Times

Buddy List   Java - Le.   KCalc   KDE Cont   Konquer   OpenOff
Local Fol   Opera 7.   emacs@   Konsole [5   Gimp [3]

04:51
2004-11-18

Figure 2:

Figure 3:

Figure 4:

EP 1 669 896 A2

Figure 5:

Figure 6:

28

# EP 1 669 896 A2

Figure 7:

Unlabeled Documents → Document → Label Document → Labeled Documents

**300**       **310**       **320**       **330**

Figure 8:

Labeled Documents → Positively Labeled Document → Tokenize Document → Label Spans in Document → Labeled Spans

**330**       **340**       **345**       **350**       **360**

Figure 9:

**360** Labeled Spans

Labeled Documents → Positively Labeled Document → Tokenize Document → Span in Document **370**

**330**       **340**       **345**

**380** Label Entities in Span

**390** Labeled Entities

Figure 10:

**390**

Labeled
Entities

**360** Labeled Spans

Labeled
Documents

**330**

Entities Within
Span

**400**

Label
Sub-Entities

**410**

Labeled
Sub-Entities

**420**

Figure 11:

**390**

Labeled
Entities

**360** Labeled Spans

Labeled
Documents

**330**

Entities Within
Span

**430**

Associate
Entities

**440**

Associated
Entities

**450**

Figure 12:

**390**

Labeled
Entities

**360** Labeled Spans

Entities Within
Span

**430**

Normalize
Entities

**460**

Normalized
Entities

**470**

Labeled
Documents

**330**

Figure 13:

**470** Normalized
Entities

**450** Associated
Entities

**390** Labeled
Entities

Entities/Normalized
Entities/Associated
Entities Within Span

**480**

**490**

Classify
Entities/Normalized
Entities/Associated
Entities

**360** Labeled Spans

Labeled
Documents

**330**

Classified
Entities/Normalized
Entities/Associated
Entities

**500**

Figure 14:

Labeled
Documents

**330**

Positively
Labeled
Document

**340**

Tokenize
Document

**345**

Split Document
into
Text-Nodes

**710**

**360** Labeled
Spans

Extract
Text-Node
Features

**720**

Assign Labels
Distinguishing the
Text Nodes of
Each Biographical
Span

**750**

Assign Span Labels
to the Text Nodes
in the Training
Sequence

**740**

Concatenate
Text-Node Feature
Vectors into a
Training Sequence

**730**

Train Markov
Model or Similar
on Labeled
Training Sequences

**760**

Output Trained
Model

**770**

Figure 15:

Positively Classified Document

**120**

Tokenize Document

**345**

Split Document into Text-Nodes

**710**

Extract Text-Node Features

**720**

Concatenate Text-Node Feature Vectors

**730**

Apply Trained Model to Generate Label Sequence

**800**

Identify Span Boundaries within Label Sequence

**810**

Output Span Boundaries

**820**

Figure 16:

Labeled Documents

**330**

Positively Labeled Document

**340**

Tokenize Document

**345**

One Training Example per Labeled Span

**910**

Extract Token Features from Tokens in each Span

**920**

**390** Labeled Entities

**360** Labeled Spans

Concatenate Token Feature Vectors into a Training Sequence, one for each Span

**930**

Assign Entity Labels to the Tokens in the Training Sequence

**940**

Assign Labels Distinguishing the Tokens of Each Entity

**950**

Train Markov Model or Similar on Labeled Training Sequences

**960**

Output Trained Model

**970**

Figure 17:

**130** — Extracted Span Boundaries

**345** — Document Tokens

Span Token Sequences
**900**

Extract Token Features
**920**

Concatenate Token Feature Vectors
**930**

Apply Trained Model to Generate Label Sequence
**1000**

Identify Entity Boundaries within Label Sequence
**1010**

Output Entity Boundaries and Labels
**1020**

Figure 18:

Labeled Documents **330** → Positively Labeled Document **340** → Tokenize Document **345** → One Training Example per Labeled Entity **1110**

**360** — Labeled Spans

**390** — Labeled Entities

**420** — Labeled Sub-Entities

Extract Token Features from Tokens in each Entity **1120**

Concatenate Token Feature Vectors into a Training Sequence, one for each Entity **1130**

Assign Sub-Entity Labels to the Tokens in the Training Sequence **1140**

Assign Labels Distinguishing the Tokens of Each Sub-Entity **1150**

Train Markov Model or Similar on Labeled Training Sequences **1160**

Output Trained Model **1170**

Figure 19:

150 — Extracted Entity Boundaries and Labels

345 — Document Tokens

Entity Token Sequences
**1100**

Extract Token Features
**1120**

Concatenate Token Feature Vectors
**1130**

Apply Trained Model to Generate Label Sequence
**1200**

Identify Sub-Entity Boundaries within Label Sequence
**1210**

Output Sub-Entity Boundaries and Labels
**1220**

Figure 20:

Labeled
Documents

**330**

Positively
Labeled
Document

**340**

Tokenize
Document

**345**

One Training
Example per Labeled
Entity Pair Within
Each Labeled Span

**1310**

**360** Labeled
Spans

**390** Labeled
Entities of the
Types to be
Associated

**450** Labeled
Associations

Train Classifier
on Labeled Entity
Pairs

**1340**

Assign Positive
Label to the
Associated Entity
Pairs

**1330**

Extract
Features for
each Entity
Pair

**1320**

Output Trained
Classifier

**1350**

Figure 21:

Figure 22:

Figure 23:

Figure 24:

**People Search - BeamSearch - Konqueror**

Location  Edit  View  Go  Bookmarks  Tools  Settings  Window  Help

Location: http://beamsearch.dnsalias.com:19211/search.act?v=people&search=patent+attorney

SuSE  MERLOT Federated Search: Search  KnowledgeNet - Course Library  Picment.com » Arti...zed input elements  .dj doma »

### people

**Australia/New Zealand**

People

Search 137,125 People for |patent attorney|   [Search]   Advanced Search

Results **1** to **10** of about **132** when searching for "**patent attorney**".                Sponsored Links

| Name | Work History | Education | Description | |
|---|---|---|---|---|
| Anthony Lee | » **Patent** and Trade Mark **Attorney**<br>» **Patent Attorney** (former)<br>» Research Physicist (former)<br>» Chartered Professional, Institute of Engineers Australia<br>» member, Institute of Engineers Australia | » PhD in Computational Physics, University of Adelaide<br>» Graduate Diploma in Intellectual Property Law, University of Melbourne<br>» law degree | Anthony Lee Anthony is a registered **Patent** and Trade Mark **Attorney** with qualifications including a PhD in Computational Physics... | **Powered by Panscient**<br>Find out more about our technology.<br>www.panscient.com<br><br>Become a Sponsor |
| Craig Vinall | » Registered **Patent Attorney**, Madderns (former)<br>» member, Asian **Patent** Attorneys Association<br>» Regional Chair, Licensing Executive Society<br>» Australian representative, Anti-Counterfeiting | » Degree in Mechanical Engineering, Institute of Technology | Craig Vinall Craig has 18 years experience in the **Patent Attorney** profession. He holds a Degree in Mechanical Engineering which was obtained... | |

42

Figure 25:

**patent attorney - People Search - BeamSearch - Konqueror**

Location   Edit   View   Go   Bookmarks   Tools   Settings   Window   Help

Location: `/=people&key=-353157564600031756:-3531575646000000966:-3531575646716951468&search=patent+attorney`

SuSE   MERLOT Federated Search: Search   KnowledgeNet - Course Library   Picment.com   » Arti...zed input elements   .dj dom; »

---

**People**

Search 137,125 People for `patent attorney`    Search    Advanced Search

| | |
|---|---|
| **Name** | Anthony Lee |
| **Work History** | » **Patent** and Trade Mark **Attorney**<br>» **Patent Attorney** (former)<br>» Research Physicist (former)<br>» Chartered Professional, Institute of Engineers Australia<br>» member, Institute of Engineers Australia |
| **Education** | » PhD in Computational Physics, University of Adelaide<br>» Graduate Diploma in Intellectual Property Law, University of Melbourne<br>» law degree |
| **URL** | http://www.madderns.com.au/people/peop_anthony.htm  Cached |
| **Last Updated** | 2004-09-16 |
| **Description** | Anthony Lee |

Anthony is a registered **Patent** and Trade Mark **Attorney** with qualifications including a PhD in Computational Physics from the University of Adelaide and a Graduate Diploma in Intellectual Property Law from the University of Melbourne.

Prior to becoming a **Patent Attorney**, Anthony was employed for five years as a Research Physicist in the Research & Development division of a large ophthalmic lens manufacturing company, working in the areas of lens design, project management and technical marketing. This time also included an 18-month secondment to San Francisco.

Following this, Anthony spent four years employed in an IT and electronic consulting engineering company designing and implementing software and hardware systems for a wide range of applications including training simulators, FTIR remote sensing instrumentation and vibration isolation systems. During this time, Anthony became a Chartered Professional member of the Institute of

Figure 26:

EP 1 669 896 A2

**Cached Page - Konqueror**

Location  Edit  View  Go  Bookmarks  Tools  Settings  Window  Help

Location: 66&recordKey=-3531575646000031756:-3531575646000000966:-3531575646716951468&search=patent+attorney

SuSE   MERLOT Federated Search: Search   KnowledgeNet - Course Library   Picment.com » Arti...zed input elements   .dj doma »

We have highlighted your search terms: patent attorney.

BeamSearch collected this page from the web, and is not affiliated with the authors of this page nor responsible for its content.

**Anthony Lee**

Anthony is a registered Patent and Trade Mark Attorney with qualifications including a PhD in Computational Physics from the University of Adelaide and a Graduate Diploma in Intellectual Property Law from the University of Melbourne.

Prior to becoming a Patent Attorney, Anthony was employed for five years as a Research Physicist in the Research & Development division of a large ophthalmic lens manufacturing company, working in the areas of lens design, project management and technical marketing. This time also included an 18-month secondment to San Francisco.

Following this, Anthony spent four years employed in an IT and electronic consulting engineering company designing and implementing software and hardware systems for a wide range of applications including training simulators, FTIR remote sensing instrumentation and vibration isolation systems. During this time, Anthony became a Chartered Professional member of the Institute of Engineers Australia.

Anthony's areas of practice include physics-related applications, software and hardware systems, optics and telecommunications. He is a member of a number of professional societies and organisations, including the Institute of Patent and Trade Mark Attorneys Australia, the Australian Institute of Physics and the Institute of Engineers Australia.

Outside of work, Anthony enjoys bike riding around the Adelaide hills, reading, listening to music, completing a law degree and appreciating fine wines.

**Email Anthony**

» anthony@madderns.com.au                    » Return to home page